# EUROPEAN PATENT APPLICATION

(11) **EP 1 239 368 A2**
(43) Date of publication of application: **11.09.2002**
(21) Application number: 02250186.0
(22) Date of filing: 11.01.2002
(51) Int. Cl.: G06F 9/50

(54) **Distributed computing using wireless mobile devices**

(30) Priority: 07.03.2001 GB 0105596
(71) Applicant: Fujitsu Services Limited, London, EC2A 1SL (GB)
(72) Inventor: Shuttleworth, Mark Andrew, Reading, Berkshire RG30 3NX (GB)
(74) Representative: Guyatt, Derek Charles

(57) **Abstract**

Mobile wireless devices such a telephones, PDAs and webpads are getting more powerful and have low duty cycles. To exploit this untapped resource, a method is described which allows computing tasks to be (optionally parallelised and) distributed among large numbers of such wireless devices and the cost of such services apportioned accordingly.

## Description

### Background to the Invention

This invention relates to a method and apparatus for distributed computing using wireless mobile devices.

There are many large computational tasks that may be parallelised. The overall problem is split into many small independent calculations. Each of these is then performed by a separate computing engine. Independent calculations are then recombined to provide the end result. This allows calculations to be performed that would be beyond the capabilities of a single serial computing engine in a realistic time. Originally, such parallelism was confined to a specially designed multi-CPU computer using high speed, low level dedicated communication protocols.

In recent years, it has been realised that other communication protocols might be used to parallelise a problem over physically dispersed computing engines. The internet has already been exploited for this. A special client program runs as a "screen saver" or other such program that only uses the CPU when it is not being otherwise gainfully employed. This client communicates using Internet Protocol with a central coordinating engine that parallelises the problem and recombines the solution.

More recently still, a similar scheme for parallelising problems onto set-top boxes has been described. The communication protocol for this is via the existing cable connections or radio frequency transmissions to the set top box already required for the broadcast and back-channel connections.

With the growth in power of mobile phones (also known as cellular phones), many people now have significant amounts of computing power at their disposal. With the advent of wireless Personal Digital Assistants (PDAs), this power is rapidly increasing. The duty cycle of such devices is typically quite small, focusing on brief, ad-hoc, on-demand activities. Furthermore these devices are likely to become ubiquitous, and via "always on" connections will be permanently accessible to a global network of other devices. There will thus be an explosive growth of well-connected "unused" CPU cycles sitting in people's back pockets.

The present invention is based on the recognition that the unused computing power in such mobile devices can be exploited to provide a new channel for performing computing activities.

### Summary of the Invention

According to the invention a computing method comprises the steps:
(a) receiving requests from customers to perform computing activities;
(b) specifying processing tasks for performing the requested computing activities;
(c) distributing the tasks over a cellular mobile telephone network to a plurality of wireless mobile devices for execution;
(d) receiving results from the wireless mobile devices by way of the cellular telephone network; and
(e) returning the results to the customers.

The invention therefore provides a "distributed bureau" computing service, which makes use of the computing power of the wireless mobile devices to perform computing activities on behalf of customers. Preferably, arrangements are made to charge the customers for the service, and to compensate the owners of the wireless mobile devices for performing the computation tasks.

### Description of an Embodiment of the Invention

One system and method in accordance with the invention will now be described by way of example with reference to the accompanying drawings. In the drawings:
- Figure 1 is an overview of a system including a scheduler for distributing tasks to a number of wireless mobile devices.
- Figure 2 is a flow chart showing the operation of the scheduler.

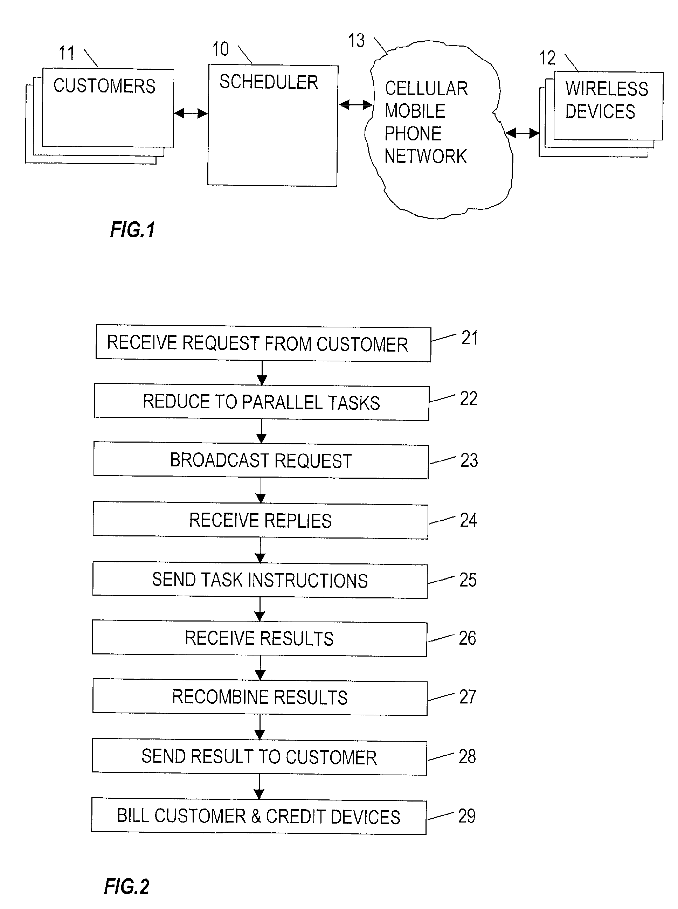

Referring to Figure 1, the system comprises a central scheduling computer (scheduler) 10. The scheduler is operated by a bureau organisation, which provides a computing service to a number of customers 11. The scheduler also communicates with a large number of wireless mobile devices 12, by way of a cellular mobile telephone network 13. The devices 12 may for example be mobile telephones, or be PDAs.

Each of the wireless mobile devices 12 includes a client program for communicating with the scheduler, and for executing tasks when requested by the scheduler. On PDAs and the like, this is an always-running communications agent. On conventional mobile phones, this would take the form of an advanced microbrowser, or a special application running on the phone's SIM and capable of intercepting messages sent via the wireless operator.

The client program also allows the mobile device user to set preferences. Such preferences include, for example:
- when it is acceptable for the device to accept tasks from the scheduler (e.g. only at night, only when there is at least half charge left on batteries); and
- what the charge should be for executing tasks (e.g. fixed price, bid/policy based, free to "worthwhile causes").

The scheduler has a defined protocol that is used by the customers to specify the requested computing activity. This allows the computing activity to be programmed in a manner that can be distributed to the relevant devices. The programming scheme may vary according to the chosen platform. For common standard system/application function calls, these can be defined and parameterised by the customer. For non-standard requirements, the whole computing activity may be completely defined via a meta-programming language such as Java.

If the requested computing activity is very large, it may need to be parallelised in order to execute in reasonable times. In the present example, the scheduler offers a standard parallel meta-language (e.g. CODE, GLU, or Java Titanium) interface that allows it to interpret and parallelise the activity into a number of tasks (where possible), and then to re-combine the results of executing the tasks to form an end result. Alternatively, the customer may parallelise the activity into a number of tasks before sending them to the scheduler, and then re-combine the results of the tasks returned from the scheduler.

Figure 2 shows the operation of the scheduler 10 in more detail.

(Step 21) The scheduler receives a request from a customer 11, specifying a requested computing activity.

(Step 22) The scheduler decides whether the computing activity must be performed as it stands in a single computational task, or whether it might be reduced to multiple smaller parallel tasks.

This decision will depend in part upon the nature of the devices available to the scheduler. For example, there may be just mobile phones with low level assembly-language engines; or there may be PDAs with de facto standard operating systems and chipsets (e.g. Windows CE, Symbian, PalmOS etc.) that can also accept dedicated downloaded languages such as Java. It can be assumed that for wireless devices, there will be: a) a diversity of devices; and b) a large number of each type potentially available. The scheduler is therefore able to decide which type of device would be best used for the type of task it needs to perform.

The scheduler can then define and encode certain critical characteristics of each task. These characteristics include:
- Memory requirements
- Minimum machine word size
- Approximate compute duration relative to speed of CPU
- Specialist computing hardware needs (e.g. math co-processor)

(Step 23) At this point, a wireless broadcast is transmitted. This is a request addressed at all devices that are part of the scheme. The request defines the nature of the task and the above minimum requirements.

(Step 24) Any device that is capable and available then replies, offering to do the task. Additional reply parameters might be how long it is estimated to take, and the cost that would be charged for the services. In this way, owners of mobile devices could set parameters that allow the device to "bid" for work.

(Step 25) The scheduler then chooses the device or devices that offer the best cost/speed trade-off for the customer and sends the appropriate task instruction messages to the selected devices. The instructions will differ by device. For standard computing functions they could be as simple as an object message (or "remote procedure call" with arguments). For non-standard functions this could be a complete program (e.g. in Java).

The task instruction messages can be implemented in several ways. They could be specially designed additions to existing wireless protocols, or they could use WAP push techniques using standard microbrowser features, or they could simply be carried out via special SMS text message encodings. However, the limitations of message size would limit the nature of the distributed task to more standard functions, unless the client program in the wireless device were to enable a large message to be split into multiple SMSs and recombined on the handset.

Whichever transport method is used, the client program in the wireless device understands the protocol with the scheduler and is also capable of executing the necessary tasks on the device, either by invocation of parameterised function or by execution of a downloaded dedicated program. It is critical that this operates in a secure mode to prevent the potential for viruses or other malign operations.

The client program in the wireless device is also responsible for micro billing for the service. There are several ways this can be done, depending upon the network operator's capabilities. For example, the client program may notify the network operator of the amount to be credited. This will either appear on the device user's regular bill as a credit against other wireless services or could even be transferred in a separate clearing bank account. The network operator would then cross charge the central scheduler bureau service accordingly. The client program may also bill credit to a non-operator service such as an independent mobile payments scheme. This again would cross-charge the bureau accordingly. The bureau server would then bill the customer according to the sum of these micro payments. (Step 26) Once the task is complete, the results are transmitted back to the scheduler.

(Step 27) If appropriate, the scheduler will then re-combine parallel results into a single overall result.

(Step 28) The overall result is returned to the customer

(Step 29) The customer is then billed accordingly, and appropriate amounts are credited to the accounts of the client devices that contributed to the tasks.

A wireless device may become uncontactable during a task, may run out of power, or may suddenly need to be fully used by its owner for high priority use for a long period. However, there may be customers who have a deadline-dependent task to complete. The scheduler is therefore preferably designed to allow multiple redundant tasks to be instigated, based on continuously updated statistics on device availability and performance. If one or more devices therefore fail to deliver in time, there is still a good chance that the overall activity will be completed on time by the backup tasks.

The protocol also allows for wireless device tasks to be aborted by the scheduler mid-execution if the need for them has been superseded. For example, if multiple redundant tasks have been instigated, it may be desirable to abort the remaining tasks as soon as one of the tasks has been completed.

### Some possible modifications

It will be appreciated that many modifications may be made to the system described above without departing from the scope of the present invention.

For example, the protocol may be designed such that each mobile device owner can also be a customer. This would enable any owner to also define a problem, broadcast it from the wireless device, have it solved by other devices, and pay for the service accordingly.

This would not require a central scheduler as such (though a remote task analysis/splitting/recombining peer service could be provided by the client scheduling engine). This would therefore operate as a peer-to-peer distributed computing service over wireless networks.

Another possible modification is that the bureau scheduling service itself could be distributed over the very machines it is controlling. Thus, each and every wireless device could be a portal into a totally distributed, dynamically allocated bureau service where all components of the service apart from billing operate in a peer community collective mode.

A further possible modification is that the mobile computing devices may have multiple communications channels available to them. The particular wireless communication method for the connection in the immediate locality of the device may not always be via the cellular operators' networks. Infrared, local area wireless networks or other radio frequency standards such as Bluetooth may also provide this part of the interconnection.

The invention may, for example, be implemented using Web Services protocols, such as XML, SOAP, WSDL, DISCO, UDDI. This would provide a very good framework for the protocols for bidding for work, the mechanism for charging and billing for processing successfully performed, and the process-chunk interfaces themselves.

## Claims

1. A computing method comprising the steps:
(a) receiving requests from customers to perform computing activities;
(b) specifying tasks for performing the requested computing activities;
(c) distributing the tasks over a cellular mobile telephone network to a plurality of wireless mobile devices for execution;
(d) receiving results from the wireless mobile devices by way of the cellular telephone network; and
(e) returning the results to the customers.

2. A method according to claim 1, including the steps:
(a) dividing a computing activity requested by a customer into a plurality of tasks;
(b) distributing the plurality of tasks to a plurality of wireless mobile devices for execution in parallel; and
(c) re-combining the results of the tasks to form an end result for returning to the customer.

3. A method according to claim 1 or 2 including the step of charging the customers for performing the computing activities.

4. A method according to any preceding claim, including the step of crediting the users of the wireless mobile devices with payments for tasks executed by those devices.

5. A method according to any preceding claim including the steps:
(a) broadcasting a message over the cellular mobile telephone network to the wireless mobile devices, offering at least one task for execution;
(b) receiving replies from wireless mobile devices that are capable and available to execute the task; and
(c) selecting at least one of the wireless mobile devices that have replied, to execute the task.

6. A method according to claim 5 wherein the message specifies computing facilities required to perform the task.

7. A method according to claim 5 or 6 wherein each reply indicates the cost that would be charged by the wireless mobile device for executing the task, and wherein a wireless mobile device is selected to execute the task taking account of the indicated cost.

8. A method according to claim 7 wherein each reply also indicates an estimated time required by the wireless mobile device for executing the task, and wherein a wireless mobile device is selected to execute the task on the basis of the best cost/speed trade-off.

9. A method according to any preceding claim including the steps:
(a) sending the same task to a plurality of different wireless mobile devices for execution; and
(b) when a result is received from any one of those wireless mobile devices, cancelling the task in the others of those devices.

10. A method according to any preceding claim wherein the wireless mobile devices include mobile telephones and PDAs.

11. A method according to any preceding claim wherein the user of each mobile device can set a preference for when the device is available to accept tasks for execution.

12. A method according to any preceding claim wherein the user of each mobile device can set a preference for how the user is to be paid for tasks executed by the device.

13. A method according to any preceding claim wherein the method is performed by means of a scheduling service, which itself is distributed over the wireless mobile devices.

14. A computing apparatus for providing a computing bureau service, the apparatus comprising:
(a) means for receiving requests from customers to perform computing activities;
(b) means for specifying tasks for performing the requested computing activities;
(c) means for distributing the tasks over a cellular mobile telephone network to a plurality of wireless mobile devices for execution;
(d) means for receiving results from the wireless mobile devices by way of the cellular telephone network; and
(e) means for returning the results to the customers.

15. Computing apparatus according to claim 14, including:
(a) means for dividing a computing activity requested by a customer into a plurality of tasks;
(b) means for distributing the plurality of tasks to a plurality of wireless mobile devices for execution in parallel; and
(c) means for re-combining the results of the tasks to form an end result for returning to the customer.

16. Computing apparatus according to claim 14 or 15, further including:
(a) means for broadcasting a message over the cellular mobile telephone network to the wireless mobile devices, offering at least one task for execution;
(b) means for receiving replies from wireless mobile devices that are capable and available to execute the task; and
(c) means for selecting at least one of the wireless mobile devices that have replied, to execute the task.
